# EUROPEAN PATENT APPLICATION

(11) **EP 4 524 100 A1**
(43) Date of publication of application: **19.03.2025**
(21) Application number: 23197548.3
(22) Date of filing: 14.09.2023
(51) Int. Cl.: C01B 3/04, C01B 3/34

(54) **PRODUCTION OF A HYDROGEN-CONTAINING SYNTHESIS GAS BY CONVERSION OF A HYDROCARBON FEEDSTOCK**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Vicari, Lorenzo, 60439 Frankfurt am Main (DE); Shrivastava, Swatantra Kumar, 60439 Frankfurt am Main (DE); Kot, Krzysztof, 31-545 Krakow (PL)
(74) Representative: Air Liquide

(57) **Abstract**

Process comprising the production of a hydrogen-containing synthesis gas by the conversion of a hydrocarbon feedstock, said process comprising :
- providing a fuel stream of ammonia comprising an ammonia content,
- decomposing at least a portion of said ammonia content into hydrogen and nitrogen, thereby obtaining an enhanced fuel, said portion of the ammonia content undergoing said decomposition being greater than 50% of the ammonia content of said fuel stream of ammonia,
- combustion of said enhanced fuel in a fired equipment to provide a heat input to the process.

## Description

The field of the present invention is the conversion of a hydrocarbon feedstock into a hydrogen-containing synthesis gas.

It is known to use ammonia as a fuel to provide heat to a process of converting a hydrocarbon feedstock into a synthesis gas. Ammonia is carbon free and the carbon dioxide emissions of the process can be reduced or even eliminated. However, ammonia has poor combustion properties and the combustion flue gas generally contains harmful components, such as NOx or un-combusted ammonia.

It has been proposed to perform a post-combustion treatment of the flue gas, for instance a selective catalytic reduction (SCR). Such post-combustion treatments are however costly.

Moreover, it has also been observed that ammonia in contact with carbon dioxide (for example coming from off gasses) can form ammonium carbonate and carbamate depending on pressure and temperature conditions. Such ammonium salts can accumulate on components of the process plant, such as pressure relief valves, with safety consequences.

It has been proposed to decompose a portion of the ammonia fuel (fuel stream of ammonia) into hydrogen and nitrogen. The hydrogen contained in the partially decomposed fuel acts as a combustion promoter. However, said decomposition reaction requires high temperatures to reach a high conversion, increasing the energy consumption of the already highly energy demanding process of converting a hydrocarbon feedstock into a synthesis gas. Therefore, a portion of the ammonia fuel undergoing said decomposition reaction has been always limited to a maximum of 50% of the overall fuel stream in such processes.

It is an aim of the present invention to propose a process wherein the combustion properties of an ammonia fuel are further improved.

For this purpose, the invention proposes a process comprising the production of a hydrogen-containing synthesis gas by the conversion of a hydrocarbon feedstock, said process comprising :
- providing a fuel stream of ammonia comprising an ammonia content,
- decomposing at least a portion of said ammonia content into hydrogen and nitrogen (decomposition into hydrogen and nitrogen), thereby obtaining an enhanced fuel,
- maintaining said portion of the ammonia content undergoing said decomposition above 50% of the ammonia content of said fuel stream of ammonia, preferably above 60% of the ammonia content of said fuel stream of ammonia, preferably above 95% of the ammonia content of said fuel stream of ammonia,
- combustion of said enhanced fuel in a fired equipment to provide a heat input to the process.

The decomposition to a greater extent of the fuel stream increases the hydrogen content of the fuel. More hydrogen is acting as a combustion promoter, enhancing the combustion properties of the fuel. The radiation efficiency is improved such that less ammonia is required for the same heat input, thereby reducing the flue gas generated. Surprisingly, the efficiency is improved to an extent that can actually be beneficial in terms of energy consumption of the hydrocarbon conversion process. In addition, a costly post-combustion treatment of the flue gas is not needed.

In one embodiment, said portion undergoing said decomposition is maintained equal to 100% of the ammonia content.

In one embodiment, the process comprises maintaining an amount of fuel stream of ammonia provided to the process to the same value.

In one embodiment, said decomposition into hydrogen and nitrogen is performed at a pressure comprised between 2 and 10 bara (absolute pressure).

In one embodiment, said decomposition into hydrogen and nitrogen is performed at a temperature comprised between 450 and 800 °C.

In one embodiment, said fuel stream of ammonia is provided at a pressure comprised between 0,5 and 10 bar gauge, preferably between 2 and 8 bar gauge.

In one embodiment, said fuel stream of ammonia is provided at a temperature comprised between 50 and 350°C, preferably between 120 and 250°C.

In one embodiment, said decomposition into hydrogen and nitrogen is performed over a catalyst promoting said decomposition. Said catalyst may comprise nickel and/or ruthenium as a catalytically active material.

In one embodiment, said enhanced fuel is obtained at a temperature comprised between 450 and 800°C, preferably between 500 and 600°C.

In one embodiment, the combustion of said enhanced fuel is performed non-catalytically.

In one embodiment, said fuel stream of ammonia comprises predominantly ammonia. In one embodiment, said ammonia content is at least 90% of the fuel stream of ammonia, preferably at least 95%. In particular, said fuel stream of ammonia is substantially pure ammonia (ie. said ammonia content is 100% of the fuel stream of ammonia).

In one embodiment, said fuel stream of ammonia is supplied as a gaseous stream to said decomposition.

In one embodiment, said fuel stream of ammonia is pre-heated before being supplied to said decomposition. In particular, said fuel stream of ammonia is superheated before being supplied to said decomposition.

In one embodiment, said fuel stream of ammonia is derived from an ammonia feedstock. Said ammonia feedstock is for example a liquid ammonia feedstock and said liquid ammonia feedstock is vaporized to obtain the fuel stream of ammonia. Said ammonia feedstock is in particular subjected to water removal.

In one embodiment, said conversion comprises an endothermic conversion of the hydrocarbon feedstock. In particular, said heat input comprises providing heat to the endothermic conversion.

In one embodiment, said heat input comprises providing heat to a water boiler for producing steam.

In one embodiment, the conversion of the hydrocarbon feedstock comprises a reforming process of the hydrocarbon feedstock, in particular a reforming process of natural gas. Said reforming process includes for example steam methane reforming or auto-thermal reforming. Alternatively, the conversion of the hydrocarbon feedstock comprises a partial oxidation of the hydrocarbon feedstock.

In one embodiment, said fired equipment comprises a fired heater, for example belonging to a reforming section, or belonging to a partial oxidation section. Said fired equipment may also comprise a purification section, a feedstock pre-heater, an auxiliary steam generator, a steam super-heater and/or a gas turbine. In particular, said fired equipment is comprised in a fired reformer, for example an autothermal reformer. In particular, said fired reformer comprises one or more catalyst-filled tubes.

In one embodiment, the synthesis gas comprises hydrogen and carbon monoxide. In particular, the synthesis gas comprises hydrogen, carbon monoxide and carbon dioxide.

In one embodiment, the process comprises recovering hydrogen from the synthesis gas and/or from a gas derived therefrom, thereby generating an off gas. In particular, the synthesis gas is subjected to a water-gas shift reaction, thereby producing a gas mix comprising carbon dioxide and hydrogen and the process comprises recovering hydrogen from said gas mix, thereby generating said off gas. In one embodiment, the generated off gas is subjected to a removal of at least part of the carbon dioxide it contains, thereby obtaining a carbon dioxide depleted off gas and producing a carbon dioxide product.

In one embodiment, the hydrogen is produced with a purity of more than 99,9%.

In one embodiment, said fuel stream of ammonia is provided as a trim fuel.

In one embodiment, the synthesis gas comprises hydrogen and nitrogen and said synthesis gas is catalytically reacted in a synthesis loop to produce ammonia. In particular, said fuel stream of ammonia is derived from the produced ammonia. In one embodiment, the synthesis loop releases an ammonia synthesis purge stream comprising unreacted synthesis gas. Preferably, the process comprises recovering hydrogen from said ammonia synthesis purge stream, thereby producing a hydrogen rich gas and generating said off gas.

In one embodiment, the synthesis gas comprises carbon oxides and hydrogen and said synthesis gas is catalytically reacted in a synthesis loop to produce methanol. In one embodiment, the synthesis loop releases a methanol synthesis purge stream comprising unreacted synthesis gas. Preferably, the process comprises subjecting at least a portion of said methanol synthesis purge stream to removal of at least part of its carbon-containing compounds, thereby producing a hydrogen rich gas.

In one embodiment, at least one additional fuel is combusted to provide a further heat input to the process. In particular, the at least one additional fuel comprises a trim fuel, a portion of said synthesis gas, said ammonia synthesis purge stream, said methanol synthesis purge stream, said hydrogen rich gas, at least part of said off gas and/or at least part of a gas derived from said off gas, such as said carbon dioxide depleted off gas.

In one embodiment, said enhanced fuel is mixed with said off gas or said carbon dioxide depleted off gas before being supplied to the combustion to provide the heat input to the process. With said enhanced fuel being decomposed into hydrogen and nitrogen to a large extent, the formation of ammonium salts by ammonia reacting with carbon dioxide contained in the off gas is reduced.

In one embodiment, the process comprises providing heat to the decomposition into hydrogen and nitrogen, in particular maintaining an amount of heat provided to the decomposition into hydrogen and nitrogen to the same value. In one embodiment, said decomposition into hydrogen and nitrogen is performed by recovering heat from the process, for example by recovering heat from the process in a waste heat recovery system. In particular, the combustion of the enhanced fuel in the fired equipment generates a flue gas and the decomposition into hydrogen and nitrogen is performed by recovering heat from the flue gas. In one embodiment, the decomposition into hydrogen and nitrogen is performed in a coil filled with said catalyst, said coil being arranged as to recover heat from the process, for example arranged as to be in heat exchange with the flue gas. Performing the decomposition into hydrogen and nitrogen by recovering heat from the process is further improving the efficiency in terms of energy consumption of the hydrocarbon conversion process. It was found that the temperature and pressure conditions of the decomposition reaction are compatible with medium temperature ranges of the waste heat recovery system. Therefore, the decomposition reaction is a very efficient way of recovering energy from such a system. Both the improved radiation efficiency and recovering heat from the process for the purpose of the decomposition also allow to decrease steam production. The recovered heat provided to the combustion along with the enhanced fuel enables to reduce the overall amount of fuel needed for said heat input to the process, thereby reducing steam production.

In one embodiment, the process comprises providing a decomposition fuel and supplying said decomposition fuel to a fueling step wherein said supplied decomposition fuel is combusted to provide heat to the decomposition into hydrogen and nitrogen. In particular, the process comprises mixing a flue gas generated by said fueling step with the flue gas generated by the combustion of the enhanced fuel in the fired equipment.

In one embodiment, the process comprises supplying at least part of said off gas and/or at least part of said gas derived from said off gas, in particular supplying at least part of said carbon dioxide depleted off gas, to said fueling step as said decomposition fuel.

In one embodiment, maintaining said portion of the ammonia content undergoing said decomposition comprises determining, in particular measuring, a remaining ammonia content of said obtained enhanced fuel.

In one embodiment, maintaining said portion of the ammonia content undergoing said decomposition comprises deriving said portion of said ammonia content decomposed into hydrogen and nitrogen from said determined remaining ammonia content.

In one embodiment, maintaining said portion of the ammonia content undergoing said decomposition comprises controlling a flow rate of the fuel stream of ammonia supplied to the decomposition into hydrogen and nitrogen according to said determined remaining ammonia content. In particular, maintaining said portion of the ammonia content undergoing said decomposition comprises reducing a flow rate of the fuel stream of ammonia supplied to the decomposition into hydrogen and nitrogen, if said derived portion is below 50% of said ammonia content, preferably below 60% of said ammonia content, preferably below 95% of said ammonia content, preferably below 100% of said ammonia content. For example, maintaining said portion of the ammonia content undergoing said decomposition comprises reducing a flow rate of the fuel stream of ammonia supplied to the decomposition into hydrogen and nitrogen, if said determined remaining ammonia content is above a predetermined value.

In one embodiment, maintaining said portion of the ammonia content undergoing said decomposition comprises controlling a flow rate of said decomposition fuel supplied to the fueling step according to said determined remaining ammonia content. In particular, maintaining said portion of the ammonia content undergoing said decomposition comprises increasing a flow rate of said decomposition fuel supplied to the fueling step, if said derived portion is below 50% of said ammonia content, preferably below 60% of said ammonia content, preferably below 95% of said ammonia content, preferably below 100% of said ammonia content. For example, maintaining said portion of the ammonia content undergoing said decomposition comprises increasing a flow rate of said decomposition fuel supplied to the fueling step, if said determined remaining ammonia content is above a predetermined value.

In one embodiment, the process comprises reducing a flow rate of said off gas and/or gas derived from said off gas supplied to the fueling step and increasing a flow rate of said off gas and/or gas derived from said off gas supplied as additional fuel. The heat input from said enhanced fuel can thereby be adjusted according to the needs, while limiting the impact on the overall heat supply to the process.

In one embodiment, said heat input to the process comprises a heat input during a transient or start-up phase of said process.

The invention also proposes an apparatus for the production of an enhanced fuel from a fuel stream of ammonia, said apparatus comprising :
- a fuel cracker comprising an inlet for feeding a fuel stream of ammonia to said fuel cracker, a decomposition section arranged for the decomposition of at least a portion of an ammonia content of said fuel stream of ammonia into hydrogen and nitrogen, thereby obtaining the enhanced fuel, and an outlet for discharging from said fuel cracker said enhanced fuel obtained,
- a fuel conduit fluidically connected to said outlet and configured to be fluidically connected to a fired equipment of a plant for the production of a hydrogen-containing synthesis gas by the conversion of a hydrocarbon feedstock, to supply said enhanced fuel to said fired equipment,
- a programmable logic controller configured for maintaining said portion above 50% of the ammonia content of said fuel stream of ammonia.

In one embodiment, the programmable logic controller is configured for maintaining said portion above 60% of the ammonia content of said fuel stream of ammonia, preferably above 95% of the ammonia content of said fuel stream of ammonia, or for maintaining said portion equal to 100% of the ammonia content of said fuel stream of ammonia.

In one embodiment, the programmable logic controller comprises an analyzer arranged for determining, in particular measuring, a remaining ammonia content of said enhanced fuel in said fuel conduit.

In one embodiment, the programmable logic controller is configured for deriving said portion of the ammonia content decomposed into hydrogen and nitrogen from said determined remaining ammonia content of said enhanced fuel.

In one embodiment, the decomposition section comprises a catalyst configured for promoting the decomposition of ammonia into hydrogen and nitrogen. Said catalyst may comprises nickel and/or ruthenium as a catalytically active material.

In one embodiment, the apparatus comprises a feed valve arranged to regulate a flow rate of the fuel stream of ammonia fed to said fuel cracker and the programmable logic controller is configured to actuate said feed valve, in particular to actuate said feed valve such as to maintain an amount of fuel stream of ammonia fed to said fuel cracker. In particular, the programmable logic controller is configured to actuate said feed valve such as to reduce a flow rate of the fuel stream of ammonia fed to the fuel cracker, if said derived portion is below 50% of said ammonia content, preferably below 60% of said ammonia content, preferably below 95% of said ammonia content, preferably below 100% of said ammonia content. In one embodiment, the programmable logic controller is configured for reducing a flow rate of the fuel stream of ammonia supplied to the decomposition into hydrogen and nitrogen, if said determined remaining ammonia content is above a predetermined value.

In one embodiment, the fuel cracker comprises a combustion section arranged in thermal communication with the decomposition section and the apparatus comprises a decomposition fueling conduit fluidically connected to the combustion section to supply a decomposition fuel to the combustion section, said combustion section being configured for the combustion of said decomposition fuel to provide heat to the decomposition of at least said portion of the ammonia content into hydrogen and nitrogen.

In one embodiment, the fuel cracker comprises a flue gas section arranged for discharging a flue gas generated by the combustion of said decomposition fuel and an ammonia fuel stream pre-heat coil connecting said inlet with said decomposition section and arranged in the flue gas section to recover heat from the flue gas to pre-heat said provided fuel stream of ammonia.

In one embodiment, the apparatus comprises a decomposition fueling valve arranged on the decomposition fueling conduit to regulate a flow rate of the decomposition fuel supplied to the combustion section and the programmable logic controller is configured to actuate said decomposition fueling valve. In particular, the programmable logic controller is configured to actuate said decomposition fueling valve such as to increase a flow rate of the decomposition fuel supplied to the combustion section, if said derived portion is below 50% of said ammonia content, preferably below 60% of said ammonia content, preferably below 95% of said ammonia content, preferably below 100% of said ammonia content. In one embodiment, the programmable logic controller is configured for increasing a flow rate of decomposition fuel supplied to the combustion section, if said determined remaining ammonia content is above a predetermined value.

In one embodiment, the decomposition section comprises at least one coil filled with said catalyst.

In one embodiment, said apparatus is a modular apparatus configured to be added to an existing plant for the production of a hydrogen-containing synthesis gas by the conversion of a hydrocarbon feedstock.

The invention also proposes a plant for the production of a hydrogen-containing synthesis gas by the conversion of a hydrocarbon feedstock, said plant comprising a fired equipment and said apparatus as previously described, wherein the fuel conduit is connected to the fired equipment for supplying said enhanced fuel to said fired equipment. In particular, the apparatus comprises a fuel valve arranged on the fuel conduit to open, close and regulate a supply of said enhanced fuel to said fired equipment.

In one embodiment, said plant comprises a conversion unit for performing said conversion of said hydrocarbon feedstock into said hydrogen-containing synthesis gas. In particular, said conversion unit comprises a fired heater to provide heat to said conversion, said fired equipment comprising said fired heater.

In one embodiment, said decomposition section is arranged in a waste heat recovery system of the plant so as to recover waste heat from the plant.

In one embodiment, said plant comprises a carbon dioxide removal and hydrogen recovery unit configured to produce hydrogen and carbon dioxide from said synthesis gas, thereby generating a carbon dioxide depleted off gas. In particular, the decomposition fueling conduit is connecting the combustion section with the carbon dioxide removal and hydrogen recovery unit to supply off gas generated by said carbon dioxide removal and hydrogen recovery unit as said decomposition fuel to the combustion section.

In one embodiment, said plant comprises an off gas fueling conduit connecting said carbon dioxide removal and hydrogen recovery unit with said fired equipment for supplying off gas generated by said carbon dioxide removal and hydrogen recovery unit as an additional fuel to said fired equipment. In particular, said plant comprises an off gas fueling valve arranged on the off gas fueling conduit to regulate a flow rate of the off gas supplied to said fired equipment. In particular, said programmable logic controller is configured to actuate the decomposition fueling valve such as to reduce a flow rate of the off gas supplied to the combustion section and configured to actuate the off gas fueling valve such as to increase a flow rate of the off gas supplied to said fired equipment.

In one embodiment, off gas fueling conduit is connected to the fuel conduit for mixing off gas generated by said carbon dioxide removal and hydrogen recovery unit with the enhanced fuel.

In one embodiment, said plant comprises a main flue gas section arranged for discharging flue gas generated by the combustion of said enhanced fuel in the fired equipment. In particular, the plant comprises a flue gas conduit fluidically connecting the flue gas section of the fuel cracker with said main flue gas section for mixing the flue gas generated by the combustion of said decomposition fuel with the flue gas generated by the combustion of said enhanced fuel.

In one embodiment, said decomposition section arranged in the waste heat recovery system is arranged in said main flue gas section to recover waste heat from said flue gas.

The invention also proposes a method of revamping of a plant for the production of a hydrogen-containing synthesis gas by the conversion of a hydrocarbon feedstock, said plant comprising a fired equipment, said method comprising providing an apparatus as previously described and connecting the fuel conduit to said fired equipment to supply enhanced fuel to said fired equipment.

In one embodiment, the method comprises arranging the decomposition section of the fuel cracker in a waste heat recovery system of the plant so as to recover waste heat from the plant.

In one embodiment, the plant comprises a carbon dioxide removal and hydrogen recovery unit configured to produce hydrogen and carbon dioxide from said synthesis gas, thereby generating a carbon dioxide depleted off gas and the method comprises connecting the decomposition fueling conduit with the carbon dioxide removal and hydrogen recovery unit to supply off gas generated by said carbon dioxide removal and hydrogen recovery unit as a decomposition fuel to the combustion section.

In one embodiment, said plant comprises a main flue gas section arranged for discharging flue gas generated by the combustion of said enhanced fuel in the fired equipment, the method comprising fluidically connecting said main flue gas section to the flue gas section of the fuel cracker with a flue gas conduit, for mixing the flue gas generated by the combustion of said decomposition fuel with the flue gas generated by the combustion of said enhanced fuel.

In one embodiment, said fired equipment comprises a reformer, for example an autothermal reformer, a feedstock pre-heater, an auxiliary steam generator, a steam super-heater and/or a gas turbine.
[Fig 1] is a schematic view of a first embodiment of the invention,
[Fig. 2] is a schematic view of a second embodiment of the invention.

In the following description, the word "connecting" in relation to a line, a conduit or a pipe shall be understood as fluidically connecting.

The term fired equipment denotes that the combustion is made with the formation of a flame. The term trim fuel denotes a fuel that is not recycled from the process or from the apparatus, that advantageously comes from the battery limit, typically useful for a quick heat regulation or for the apparatus start-up.

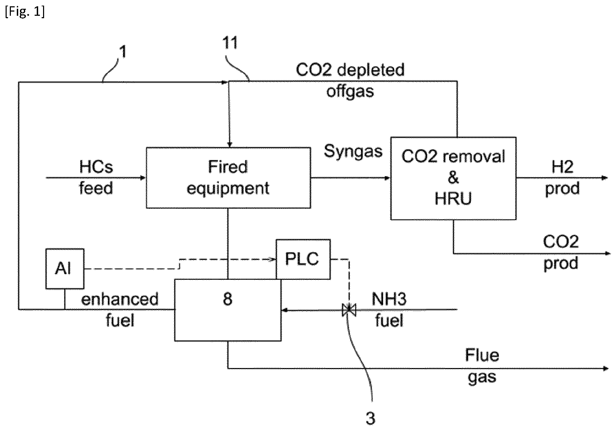

Figure 1 shows a scheme of a plant for the production of a hydrogen-containing synthesis gas by a process of converting a hydrocarbon feedstock (HCs feed). The plant comprises a fired equipment arranged to be supplied with a fuel to perform an endothermic conversion of said hydrocarbon feedstock. The fired equipment comprises a fired heater of a conversion unit, said conversion unit comprising a reactor configured for performing the endothermic conversion with heat generated by the fired heater. Said reactor is configured to receive said hydrocarbon feed and for producing said synthesis gas (Syngas) comprising hydrogen, carbon monoxide and carbon dioxide from said endothermic conversion.

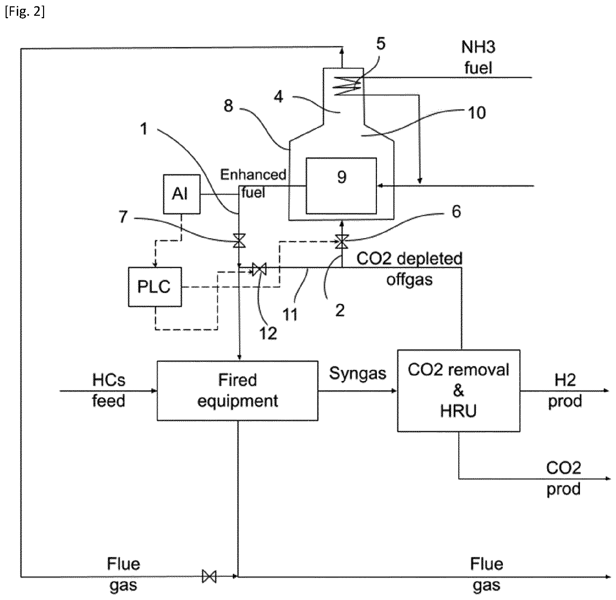

The plant comprises a fuel cracker 8 comprising an inlet for feeding a fuel stream of ammonia (NH3 fuel) to said fuel cracker 8, said fuel stream of ammonia being for example provided from the battery limit as a trim fuel and consisting preferably of substantially pure ammonia. As represented in the embodiment of figure 1, the fuel cracker 8 may comprise a feed valve 3 to regulate an amount of fuel stream of ammonia fed to the fuel cracker 8. The fuel cracker 8 comprises a decomposition section 9 (not shown on figure 1, shown on figure 2) for performing a decomposition of at least a portion of the ammonia content of the fuel stream of ammonia fed to the fuel cracker 8 into hydrogen and nitrogen (decomposition reaction), in order to obtain an enhanced fuel (H2-N2 fuel) with an increased hydrogen content.

In a case where only a portion of the fuel stream of ammonia fed to the fuel cracker 8 is decomposed, the enhanced fuel comprises said hydrogen and nitrogen produced by the decomposition and comprises the portion of the ammonia that was not decomposed. The fuel cracker 8 comprises an outlet for discharging the obtained enhanced fuel from the fuel cracker 8. The decomposition of at least a portion of the ammonia content into hydrogen and nitrogen is an endothermic cracking reaction of ammonia promoted by a suitable catalyst, for example comprising nickel or ruthenium as catalytically active material. In some embodiments as in figure 1, the fuel cracker 8 is integrated in a flue gas waste heat recovery section of the plant, to recover heat from a flue gas generated by the combustion of said fuel supplied to the fired equipment. The recovered heat is used to run said endothermic cracking reaction. For example, the decomposition section 9 comprises a coil filled with a catalyst configured for promoting the decomposition reaction, said coil being arranged in the flue gas waste heat recovery section (extending through a flue gas tunnel for example). An amount of heat provided to the decomposition into hydrogen and nitrogen may be maintained by regulating an amount of fuel supplied to the fired equipment.

A fuel conduit 1 is connecting said outlet with the fired equipment to supply the discharged enhanced fuel to the fired equipment. A fuel valve 7 (not shown on figure 1, shown on figure 2) may be arranged on the fuel conduit 1 to open, close and regulate a supply of the enhanced fuel to the fired equipment. The supplied enhanced fuel is combusted in the fired equipment, thereby generating heat. As a heat input to the process, the generated heat is provided to the reactor for performing the endothermic conversion. It is to be understood that any further heat input to the process may be provided from any additional fuel.

In the embodiments of figure 1 and 2, the plant comprises a carbon dioxide removal and hydrogen recovery unit (CO2 removal & HRU) configured to separate the hydrogen and carbon dioxide contained in said synthesis gas from a carbon dioxide and hydrogen depleted off gas, to obtain a hydrogen product (H2 prod) and a carbon dioxide product (CO2 prod). The synthesis gas may be subjected to a water-gas shift reaction upstream of said carbon dioxide removal and hydrogen recovery unit, in which case off gas is generated from a gas derived from said synthesis gas. In non-represented embodiments, off gas is generated from the purge of an ammonia or methanol synthesis loop (ie. from a gas derived from said synthesis gas). The plant comprises an off gas fueling conduit 11 arranged for supplying the generated carbon dioxide and hydrogen depleted off gas as an additional fuel to the fired equipment. The off gas fueling conduit 11 is connected to the fuel conduit 1 for mixing the carbon dioxide and hydrogen depleted off gas with the enhanced fuel. The invention has the advantage that, with the enhanced fuel comprising hydrogen and nitrogen to a large extent, the formation of ammonium salts by ammonia reacting with carbon dioxide still contained in the off gas is greatly reduced. An off gas fueling valve 12 is arranged on the off gas fueling conduit 11 to regulate an amount of the off gas supplied to said fired equipment.

The embodiment of figure 2 differs from the embodiment of figure 1 in that the fuel cracker 8 is not integrated in the flue gas waste heat recovery section of the plant, but instead consist of a modular fuel cracker that was added to the plant during a revamping of said plant. The fuel cracker 8 of figure 2 comprises a combustion section 10 arranged in thermal communication with the decomposition section 9. The combustion section 10 is configured for the combustion of a fuel, referred as "decomposition fuel", to provide heat to the endothermic cracking reaction of decomposition of said portion of the ammonia content. A decomposition fueling conduit 2 is connecting the carbon dioxide removal and hydrogen recovery unit to the combustion section 10 to supply the carbon dioxide and hydrogen depleted off gas as said decomposition fuel to the combustion section 10 and a decomposition fueling valve 6 allows to regulate an amount of decomposition fuel supplied to the combustion section 10. For example, an amount of heat provided to the decomposition into hydrogen and nitrogen may be in this way maintained.

As represented in the embodiment of figure 2, the fuel cracker 8 may comprise a flue gas section 4 arranged for discharging a flue gas generated by the combustion of said decomposition fuel. A coil, referred as pre-heat coil 5, is connecting the fuel cracker 8 inlet with the decomposition section 9, said coil extending through the flue gas section 4 in order to recover heat from the flue gas generated by the combustion of said decomposition fuel to pre-heat the fuel stream of ammonia fed to the fuel cracker 8. The flue gas from the combustion section 10 is mixed with the flue gas from the fired equipment at a suitable location to mitigate temperature differences.

The plant comprises a programmable logic controller (PLC) or controller configured for maintaining said portion of the ammonia content decomposed into hydrogen and nitrogen above 50% of the overall ammonia content of the fuel stream of ammonia. This means that the entire ammonia content may be decomposed into hydrogen and nitrogen, in which case said portion is equal to 100% of the overall ammonia content (ie the programmable logic controller is configured for maintaining the decomposition of the entire ammonia content of the fuel stream of ammonia). The programmable logic controller comprises an analyzer (Al) or a sensor arranged for measuring a remaining ammonia content in the enhanced fuel. The programmable logic controller may as well estimate the remaining ammonia content in said enhanced fuel by mass-balance calculations. The programmable logic controller is programmed for deriving said portion of the ammonia content decomposed into hydrogen and nitrogen from said measured remaining ammonia content, for example taking into account possible impurities contained in the fuel stream of ammonia. Irrespective of which portion or percentage of said overall ammonia content is undergoing said decomposition, a hydrogen / nitrogen molar ratio of the enhanced fuel is around 3:1.

The controller is connected to actuators of the feed valve 3, decomposition fueling valve 6 and off gas fueling valve 12 by data transmission means (such as wires or wireless transmission means), to actuate said valves.

In the embodiment of figure 1, the controller is configured for maintaining said portion above 50% by actuating the feed valve 3, reducing an amount of fuel stream of ammonia fed to the fuel cracker 8, if said measured or estimated remaining ammonia content is above a predetermined value. Said predetermined value may correspond to a remaining ammonia content above 50% of the overall enhanced fuel minus the impurities contained in said enhanced fuel.

In the embodiment of figure 2, the controller is configured for maintaining said portion above 50% by actuating the decomposition fueling valve 6, increasing an amount of carbon dioxide depleted off gas supplied to the combustion section 10 as said decomposition fuel, if said measured or estimated remaining ammonia content is above a predetermined value. Said predetermined value may correspond to a remaining ammonia content above 50% of the overall enhanced fuel minus the impurities contained in said enhanced fuel.

It may be advantageous to adjust the heat input provided from said enhanced fuel. In the embodiment of figure 2, the controller is configured for actuating the decomposition fueling valve 6, reducing an amount of the off gas supplied to the combustion section 10 as said decomposition fuel, and configured for actuating the off gas fueling valve 12, increasing an amount of off gas supplied to the fired equipment as additional fuel.

## Claims

1. Process comprising the production of a hydrogen-containing synthesis gas by the conversion of a hydrocarbon feedstock, said process comprising :
- providing a fuel stream of ammonia comprising an ammonia content,
- decomposing at least a portion of said ammonia content into hydrogen and nitrogen, thereby obtaining an enhanced fuel,
- maintaining said portion of the ammonia content undergoing said decomposition above 50% of the ammonia content of said fuel stream of ammonia,
- combustion of said enhanced fuel in a fired equipment to provide a heat input to the process.

2. Process according to the preceding claim, wherein said conversion comprises an endothermic conversion of the hydrocarbon feedstock, said heat input comprising providing heat to the endothermic conversion.

3. Process according to one of the preceding claims, wherein maintaining said portion of the ammonia content undergoing said decomposition comprises determining a remaining ammonia content of said obtained enhanced fuel and controlling a flow rate of the fuel stream of ammonia supplied to the decomposition into hydrogen and nitrogen according to the determined remaining ammonia content.

4. Process according to one of the preceding claims, said decomposition into hydrogen and nitrogen being performed by recovering heat from the process.

5. Process according to one of the preceding claims, comprising providing a decomposition fuel and supplying said decomposition fuel to a fueling step wherein said supplied decomposition fuel is combusted to provide heat to the decomposition into hydrogen and nitrogen.

6. Process according to the preceding claim, wherein maintaining said portion of the ammonia content undergoing said decomposition comprises determining a remaining ammonia content of said obtained enhanced fuel and controlling a flow rate of said decomposition fuel supplied to the fueling step according to the determined remaining ammonia content.

7. Process according to one of the preceding claims, comprising recovering hydrogen from the synthesis gas and/or from a gas derived therefrom, thereby generating an off gas.

8. Process according to the preceding claim, wherein at least one additional fuel is combusted to provide a further heat input to the process, the at least one additional fuel comprising at least part of said off gas and/or at least part of a gas derived from said off gas.

9. Process according to the preceding claim and claim 5, comprising supplying part of said off gas and/or part of said gas derived from said off gas to said fueling step as said decomposition fuel.

10. Process according to the preceding claim, comprising reducing a flow rate of said off gas and/or gas derived from said off gas supplied to the fueling step and increasing a flow rate of said off gas and/or gas derived from said off gas supplied as additional fuel.

11. Process according to one of claim 1 to 10, wherein the synthesis gas comprises hydrogen and nitrogen and said synthesis gas is catalytically reacted in a synthesis loop to produce ammonia.

12. Apparatus for the production of an enhanced fuel from a fuel stream of ammonia, said apparatus comprising :
- a fuel cracker (8) comprising an inlet for feeding a fuel stream of ammonia to said fuel cracker (8), a decomposition section (9) arranged for the decomposition of at least a portion of an ammonia content of said fuel stream of ammonia into hydrogen and nitrogen, thereby obtaining the enhanced fuel, and an outlet for discharging from said fuel cracker (8) said enhanced fuel obtained,
- a fuel conduit (1) fluidically connected to said outlet and configured to be fluidically connected to a fired equipment of a plant for the production of a hydrogen-containing synthesis gas by the conversion of a hydrocarbon feedstock, to supply said enhanced fuel to said fired equipment,
- a programmable logic controller configured for maintaining said portion above 50% of the ammonia content of said fuel stream of ammonia.

13. Apparatus according to the preceding claim, being a modular apparatus configured to be added to an existing plant for the production of a hydrogen-containing synthesis gas by the conversion of a hydrocarbon feedstock.

14. Plant for the production of a hydrogen-containing synthesis gas by the conversion of a hydrocarbon feedstock, said plant comprising a fired equipment and an apparatus according to one of claims 12 or 13, wherein the fuel conduit (1) is connected to the fired equipment for supplying said enhanced fuel to said fired equipment.

15. Method of revamping of a plant for the production of a hydrogen-containing synthesis gas by the conversion of a hydrocarbon feedstock, said plant comprising a fired equipment, said method comprising providing an apparatus according to one of claims 12 or 13 and connecting the fuel conduit (1) to said fired equipment to supply enhanced fuel to said fired equipment.
